# EUROPEAN PATENT APPLICATION

(11) **EP 3 435 313 A1**
(43) Date of publication of application: **30.01.2019**
(21) Application number: 17785863.6
(22) Date of filing: 11.04.2017
(51) Int. Cl.: G06Q 30/00, G10L 13/00, G10L 15/00, G10L 15/10, G10L 15/22, G10L 25/63

(54) **RESPONSE DATA COLLECTION SYSTEM, CUSTOMER RESPONSE SYSTEM AND PROGRAM**

(30) Priority: 22.04.2016 JP 2016086134
(71) Applicant: Cocoro SB Corp., Tokyo 105-7309 (JP)
(72) Inventor: SON Masayoshi, Tokyo 105-7309 (JP); TSUTSUI Takashi, Tokyo 105-7309 (JP); TOMONAGA Kosuke, Tokyo 105-7309 (JP); OURA Kiyoshi, Tokyo 105-7309 (JP)
(74) Representative: Michalski Hüttermann & Partner Patentanwälte mbB
(86) International application number: PCT/JP2017/014874
(87) International publication number: WO 2017/183524

(57) **Abstract**

A serving data collecting system includes: a customer information acquiring unit that acquires customer information which is information about a customer that can be served by a customer serving apparatus; a presentation control unit that causes the customer information to be presented to an operator; a serving information acquiring unit that acquires serving information indicative of a serving content which is decided by the operator and according to which the customer serving apparatus should serve the customer; a serving decision information acquiring unit that acquires decision information indicative of information that the operator used for deciding the serving content; and a recording control unit that causes the serving information and the decision information to be recorded in association with each other.

## Description

### BACKGROUND

### 1. TECHNICAL FIELD

The present invention relates to a serving data collecting system, a customer serving system and a computer program.

### 2. RELATED ART

A terminal that studies conversations between a user and another person that the user is talking to on the phone and accumulates, in a reply table, replies from the other person on the phone to questions from the user has been known (please see Patent Literature 1, for example).

### [Prior Art Literature]

### [Patent Literature]

[Patent Literature 1] Japanese Patent Application Publication No. 2011-253389

In a system which causes devices to serve users, the devices cannot serve the users appropriately in some cases. For example, when a device decides a serving content, it cannot be appropriately decided which input information should be prioritized for use in some case. In addition, there is a drawback. Study data for a device to decide a serving content cannot be collected efficiently.

### [General Disclosure]

A first aspect of the present invention provides a serving data collecting system. The serving data collecting system may include a customer information acquiring unit that acquires customer information which is information about a customer that can be served by a customer serving apparatus. The serving data collecting system may include a presentation control unit that causes the customer information to be presented to an operator. The serving data collecting system may include a serving information acquiring unit that acquires serving information indicative of a serving content which is decided by the operator and according to which the customer serving apparatus should serve the customer. The serving data collecting system may include a serving decision information acquiring unit that acquires decision information indicative of information that the operator used for deciding the serving content. The serving data collecting system may include a recording control unit that causes the serving information and the decision information to be recorded in association with each other.

The serving data collecting system may include a serving control unit that instructs the customer serving apparatus to serve the customer based on the serving information acquired by the serving information acquiring unit.

The serving information may include text data indicative of a content of utterance by the operator. The serving control unit may transmit the text data to the customer serving apparatus and causes the customer serving apparatus to utter.

The serving decision information acquiring unit may acquire information indicative of a type of customer information that the operator used for deciding the serving content among a plurality of pieces of the customer information presented to the operator.

The customer information may include at least any one of pieces of information about: an image of the customer acquired by the customer serving apparatus; a content of utterance by the customer acquired by the customer serving apparatus; a history of purchase of items purchased by the customer in a past; a place at which the customer serving apparatus serves the customer; and a date on which the customer serving apparatus serves the customer.

The customer serving apparatus may be able to be in a first state in which the customer serving apparatus autonomously serves a customer, and in a second state in which the customer serving apparatus serves a customer based on the serving information
If the customer serving apparatus is in the second state, the serving information acquiring unit may acquire the serving information. If the customer serving apparatus is in the second state, the serving decision information acquiring unit may acquire the decision information. If the customer serving apparatus is in the second state, the recording control unit may cause the serving information and the decision information to be recorded in association with each other.

In the first state, the customer serving apparatus may autonomously serve a customer based on the recorded decision information and the serving information.

The serving data collecting system may include a serving history notifying unit that, if the customer serving apparatus makes a transition from the first state to the second state, notifies the operator of serving history information indicative of a content according to which the customer serving apparatus autonomously served the customer in the first state.

The serving data collecting system may include a customer identifying unit that identifies, among a plurality of customers that can be served by each of a plurality of the customer serving apparatuses, a customer to be served by an operator. The serving data collecting system may include an operator selecting unit that selects, from a plurality of operators, an operator to serve a customer identified by the customer identifying unit. The serving data collecting system may include a serving notifying unit that notifies an operator selected by the operator selecting unit that the operator should start serving a customer identified by the customer identifying unit.

The serving data collecting system may include an emotion identifying unit that identifies types and intensities of emotions of customers that are served by the plurality of customer serving apparatuses, respectively, based on state of the customers detected by the customer serving apparatus. The customer identifying unit may identify, as a customer to be served by the operator, a customer identified by the emotion identifying unit as having an intensity of a predetermined type of emotion exceeding a predetermined value.

The emotion identifying unit may identify intensities of anger of customers that are served by the plurality of customer serving apparatuses respectively. The customer identifying unit may identify, as a customer to be served by the operator, a customer identified by the emotion identifying unit as having an intensity of anger exceeding a predetermined value.

The serving data collecting system may include a storage unit that stores the serving information and the decision information in association with each other.

A second aspect of the present invention provides a system. The system may include the above-mentioned serving data collecting system. The system may include the above-mentioned customer serving apparatus.

A third aspect of the present invention provides a program for causing a computer to function as the above-mentioned serving data collecting system.

The general disclosure clause does not necessarily describe all necessary features of the embodiments of the present invention. The present invention may also be a sub-combination of the features described above.

### BRIEF DESCRIPTION OF THE DRAWINGS

FIG. 1 schematically shows one example of usage situations of a customer serving system 10 according to the present embodiment.
FIG. 2 schematically shows the functional block configurations of a robot 40 and a server 60.
FIG. 3 is a figure for schematically explaining a sequence in a situation where a robot 40a in an autonomous operation state is serving a customer 50a.
FIG. 4 is a figure for schematically explaining a sequence until an operator 80a is requested to serve the customer 50a.
FIG. 5 schematically shows a display content of a serving notification by an operator terminal 70a.
FIG. 6 schematically shows a display content of a computer 72a in a situation where the robot 40a is in an operator serving state.
FIG. 7 schematically shows a sequence in a situation where the robot 40a is serving the customer 50a based on an action of the operator 80a.
FIG. 8 schematically shows an updated display content on the operator terminal 70a.
FIG. 9 schematically shows a sequence in a situation where utterance of an AI proposal is instructed by the operator 80a.
FIG. 10 schematically shows a sequence until the robot 40a returns to an autonomous operation state.
FIG. 11 schematically shows a display content displayed when serving study information is registered on the operator terminal 70a.
FIG. 12 schematically shows study information stored in a storage unit 280.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

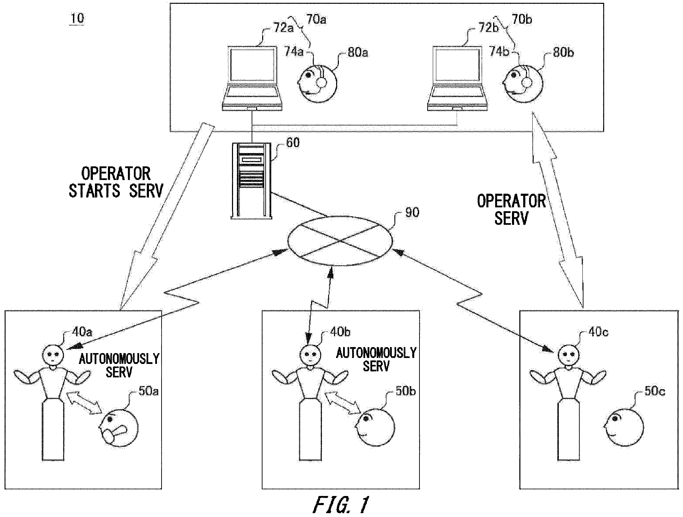

FIG. 1 schematically shows one example of usage situations of a customer serving system 10 according to the present embodiment. The customer serving system 10 includes a server 60; a robot 40a, a robot 40b and a robot 40c; and an operator terminal 70a and an operator terminal 70b. The constituent portion including: the operator terminal 70a and operator terminal 70b; and the server 60 functions also as a serving data collecting system.

The robot 40a, robot 40b and robot 40c are provided remotely from the operator terminal 70a and operator terminal 70b. In addition, the robot 40a, robot 40b and robot 40c are provided remotely also from the server 60. An operator 80a uses the operator terminal 70a to be able to manipulate any of the robot 40a, robot 40b and robot 40c through the server 60 and a communication network 90. Likewise, an operator 80b uses the operator terminal 70b to be able to manipulate any of the robot 40a, robot 40b and robot 40c through the server 60 and the communication network 90.

The robot 40a, robot 40b and robot 40c are arranged at a reception desk of a store or office or the like, for example, and can autonomously serve visiting customers. In the situation shown in FIG. 1, the robot 40a is autonomously serving a customer 50a. The robot 40b is autonomously serving a customer 50b. On the other hand, an operator 80b is serving a customer 50c through an operator terminal 70b, the server 60 and the robot 40c.

Operation in the customer serving system 10 is explained schematically taking, as an example, a case where in this situation, the robot 40a cannot appropriately serve the customer 50a. The robot 40a has a camera function and a microphone function, and transmits a captured image of the customer 50a to the server 60 through the communication network 90. Upon determining that a serving content of the robot 40a cannot be decided appropriately based on information such as an image or a sound of the customer 50a, or the like received from the robot 40a, the server 60 requests the operator 80a not serving a customer to serve the customer 50a. The operator 80a manipulates the robot 40a through the operator terminal 70a and server 60 to serve the customer 50a.

Here, operation by the operator terminal 70a to serve the customer 50a is explained schematically. The operator terminal 70a has a computer 72a and a headset 74a. The computer 72a receives, from the server 60, an image and a sound of the customer 50a acquired by the robot 40a. The image received by the computer 72a is provided to the operator 80a through a screen of the computer 72a. In addition, the sound received by the computer 72a is provided to the operator 80a through the headset 74a. In addition, the server 60 provides, to the computer 72a, various types of customer information such as the history of interactions between the robot 40a and the customer 50a, a current emotion of the customer 50a, or the item purchase history of the customer 50a.

At the operator terminal 70, sounds made by the operator 80a are acquired through the headset 74a, and supplied to the computer 72a as sound data. The computer 72a converts the sound data into text data, and transmits it to the robot 40a through the server 60 and communication network 90. The robot 40a utters according to the received text data. Thereby, the operator 80a can serve the customer 50a through the robot 40a.

Here, based on an image of the face of a customer, the past interaction history or the like that are acquired from the server 60 and displayed on the computer 72a, the operator 80a determines an appropriate utterance content for the customer 50a and utters. For example, the operator 80a can ask the customer 50a wearing a mask a question "Do you have hay fever?", for example. Thereby, even if a situation occurs where a robot 40 cannot autonomously engage in conversation appropriately, it can proceed with conversation with a customer 50 appropriately.

At the operator terminal 70, the operator 80a registers information that was taken into consideration at the time of deciding an utterance content. For example, if the operator 80a uttered "Do you have hay fever?" after looking at an image of the face of the customer 50a and finding that the customer 50a is wearing a mask, the operator 80a inputs, to the computer 72a, information that the utterance content was decided based on a camera image of the robot 40a. This information is transmitted to the server 60, and the server 60 records information about "customer image" and an utterance content "Do you have hay fever?" in association with each other. Thereby, the server 60 collects combinations of utterance contents and information that was taken into consideration by the operator 80 at the time of the utterance. The information collected at the server 60 is used as a training data for study by a robot 40 to judge utterance contents. Thereby, it becomes more likely that a robot 40 selects a behavior of uttering "Do you have hay fever?" if an image of a customer wearing a mask is acquired when the robot 40 is autonomously serving.

In this manner, with the customer serving system 10, information used by an operator 80 in determination can be collected efficiently as study data for deciding serving contents of a robot 40. In addition, information used by an operator 80 in determination can be taken into consideration with a larger weight being given to it when a serving content of the robot 40a is judged.

The robot 40b and robot 40c have functions which are approximately the same as those of the robot 40a. In an explanation of the customer serving system 10, the robot 40a, robot 40b and robot 40c are collectively referred to as a robot 40 in some cases. In addition, the operator terminal 70b has a computer 72b and a headset 74b, and has functions which are approximately the same as those of the operator terminal 70a. In an explanation of the customer serving system 10, the operator terminal 70a and operator terminal 70b are collectively referred to as an operator terminal 70 in some cases.

In an explanation of the customer serving system 10, operation of a combination of the robot 40a and the operator terminal 70a is particularly mentioned in some cases. However, the combination of the robot 40 and the operator terminal 70 is not limited to only those combinations, and the same operation can be realized in any combination.

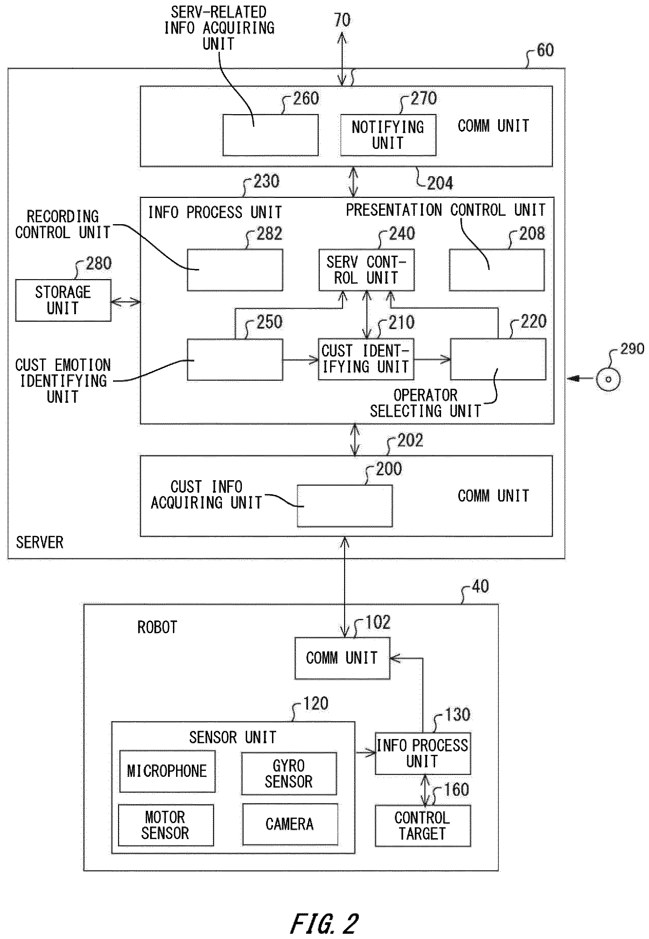

FIG. 2 schematically shows the functional block configurations of the robot 40 and the server 60. First, the functional block configuration of the robot 40 is explained. The robot 40 has a sensor unit 120, an information processing unit 130, a control target 160 and a communicating unit 102. The information processing unit 130 may be a processor such as an MPU. The communicating unit 102 is responsible for communication with the server 60. The communicating unit 102 may be a communication device such as a network IF.

The control target 160 includes a speaker. The control target 160 also includes motors to drive movable portions such as limbs or a head portion of the robot 40, or the like.

The sensor unit 120 has various types of sensors such as a microphone, a gyro sensor, a motor sensor or a camera. The microphone of the sensor unit 120 acquires ambient sounds. For example, the microphone of the sensor unit 120 acquires sounds of a customer 50. The camera of the sensor unit 120 captures an image using visible light and generates image information. The gyro sensor of the sensor unit 120 detects the angular velocities of the entire robot 40 and each unit of the robot 40. The motor sensor of the sensor unit 120 detects the rotation angles of the drive axes of motors to drive movable portions of the robot 40.

The sensor unit 120 outputs, to the information processing unit 130, various types of sensor data such as sound data acquired using the microphone, images captured by the camera, angular velocities detected by the gyro sensor or rotation angles detected by the motor sensor. The information processing unit 130 supplies acquired sensor signals to the communicating unit 102 and causes them to be transmitted to the server 60. In addition, the information processing unit 130 decides behavior of the robot 40 based on various types of sensor data detected at the sensor unit 120. The information processing unit 130 controls the control target 160 based on the decided behavior.

For example, the information processing unit 130 decides contents of utterance by the robot 40, movement of limbs of the robot 40 or the like based on various types of sensor data or information acquired from the server 60. Specifically, the information processing unit 130 analyzes sound data acquired using the microphone of the sensor unit 120 to identify a content of utterance by the customer 50. In addition, the information processing unit 130 identifies a facial expression of the customer 50 based on image information generated by the camera of the sensor unit 120. The information processing unit 130 decides contents of utterance by the robot 40 or movement of limbs of the robot 40 based on contents of utterance by the customer 50, facial expressions of the customer 50 or the like and controls a speaker and a motor of the control target 160 to cause the robot 40 to utter and operate the limbs or the like. Thereby, the robot 40 can understand contents of utterance by the customer 50 or the like, engage in conversation with the customer 50, guide the customer 50, and so on. In this manner, the robot 40 can autonomously serve the customer 50.

The robot 40 may transmit information acquired at the sensor unit 120 or the like to the server 60, and the server 60 may decide contents of utterance by the robot 40, movement of limbs of the robot 40 or the like. The robot 40 may receive instruction information about utterance contents, movement of limbs or the like decided at the server 60, and utter or operate the limbs based on the instruction information. If the server 60 decides behavior of the robot 40 in this manner also, the robot 40 can be regarded as being autonomously serving because human instructions are substantially not involved in the behavior of the robot 40.

Contents that the robot 40 utters may be decided at the server 60 and transmitted to the robot 40. In this case, a block including a portion at the server 60 that decides utterance contents and the robot 40 may function as a customer serving apparatus.

Next, the functional block configuration of the server 60 is explained. The server 60 has an information processing unit 230, a communicating unit 202, a communicating unit 204 and a storage unit 280. The information processing unit 230 has a serving control unit 240, a customer emotion identifying unit 250, a customer identifying unit 210, an operator selecting unit 220, a presentation control unit 208 and a recording control unit 282. Functions of the information processing unit 230 may be implemented by a processor such as an MPU. For example, functions of the customer identifying unit 210, operator selecting unit 220, serving control unit 240, customer emotion identifying unit 250, presentation control unit 208 and recording control unit 282 may be implemented by a program stored on a recording medium 290 being read in by the processor.

The communicating unit 202 is responsible for communication with the robot 40. The communicating unit 202 has a customer information acquiring unit 200. The communicating unit 204 is responsible for communication with the operator terminal 70. The communicating unit 204 has a notifying unit 270 and a serving-related information acquiring unit 260. The communicating unit 202 and communicating unit 204 may be communication devices such as network IFs. The storage unit 280 has a storage medium such as a hard disk drive or a flash memory. In addition, the storage unit 280 has a volatile storage device such as a RAM. The storage unit 280 stores data required for execution of processes by the information processing unit 230 or the like, besides program codes to be read out by the serving control unit 240 at the time of execution and various types of transient data.

The customer information acquiring unit 200 acquires customer information which is information about customers that can be served by the robot 40. For example, the customer information acquiring unit 200 receives, through the communication network 90, information about customers acquired by the robot 40. The customer information may include at least any one of pieces of information about: customer images acquired by the robot 40; customer utterance contents acquired by the robot 40; the history of purchase of items purchased by customers in the past; places at which the robot 40 serves customers; and dates on which the robot 40 serves customers.

The presentation control unit 208 causes customer information acquired by the customer information acquiring unit 200 to be presented to the operator 80. Specifically, the presentation control unit 208 causes the customer information to be transmitted from the communicating unit 204 to the operator terminal 70, and causes the computer 72 of the operator terminal 70 to display the customer information.

The serving-related information acquiring unit 260 acquires serving information indicative of serving contents which were decided by the operator 80 and according to which the robot 40 should serve a customer. In addition, the serving-related information acquiring unit 260 acquires decision information indicative of information used by the operator 80 to decide a serving content. For example, the serving-related information acquiring unit 260 acquires, from the operator terminal 70, the above-mentioned content of utterance by the operator 80, "Do you have hay fever?", and information indicative of "customer image" that the operator 80 input to the computer 72 of the operator terminal 70. The serving-related information acquiring unit 260 may acquire information indicative of the type of customer information which is included in a plurality of pieces of customer information that the presentation control unit 208 caused to be presented to a customer and was used by the operator 80 to decide a serving content.

The recording control unit 282 causes serving information and decision information to be recorded in association with each other. Specifically, the recording control unit 282 causes the storage unit 280 to store serving information and decision information in association with each other.

The serving control unit 240 instructs the robot 40 to serve a customer based on the serving information acquired by the serving-related information acquiring unit 260. For example, the serving information includes text data indicative of a content of utterance by the operator 80. The serving control unit 240 transmits the text data to the robot 40 and causes the robot 40 to utter. In this manner, the server 60 can accumulate combinations of contents according to which the operator 80 actually served customers through the robot 40 and information taken into consideration by the operator 80 to decide the serving contents.

The robot 40 can be in an autonomous operation state in which it autonomously serves customers, and in an operator serving state in which it serves customers based on serving information decided by the operator 80. In the serving data collecting system, if the robot 40 is in the operator serving state, the serving-related information acquiring unit 260 acquires serving information, the serving-related information acquiring unit 260 acquires decision information, and the recording control unit 282 causes the serving information and the decision information to be recorded in association with each other. Then, if the robot 40 is in the autonomous operation state, it autonomously serves customers based on the decision information and serving information recorded in the storage unit 280. Thereby, for example if as mentioned above, an utterance content, "Do you have hay fever?", and information indicative of "customer image" are stored in the storage unit 280 in association with each other, when the serving control unit 240 determines that a mask is included in an image of the face of a customer received from the robot 40 in the autonomous operation state, it becomes more likely for an utterance, "Do you have hay fever?", to be selected.

If the robot 40 makes a transition from the autonomous operation state to the operator serving state, the notifying unit 270 notifies the operator 80 of serving history information indicative of a content indicating how the robot 40 autonomously served a customer in the autonomous operation state. Thereby, the operator 80 can check how the robot 40 served and decide a serving content.

Based on customer information, the customer identifying unit 210 identifies a customer to be served by the operator 80 among a plurality of customers that can be served by each of a plurality of robots 40. For example, the customer identifying unit 210 may identify, as a customer to be served by the operator 80, a customer whose emotion worsened due to a robot 40 in the autonomous serving state. The operator selecting unit 220 selects, from among a plurality of operators 80, an operator 80 to serve a customer identified by the customer identifying unit 210. The notifying unit 270 notifies the operator 80 selected by the operator selecting unit 220 that he/she should start serving the customer identified by the customer identifying unit 210. Thereby, for example if an emotion of a customer worsened while the robot 40 was autonomously serving him/her, an operator can start serving the customer. On the other hand, if an emotion of a customer did not worsen while the robot 40 was autonomously serving him/her, operators are not required to serve the customer.

The customer emotion identifying unit 250 identifies the intensities of anger of customers that are served by a plurality of robots 40, respectively. Then, specifically, the customer identifying unit 210 may identify, as a customer to be served by the operator 80, a customer for whom the intensity of anger exceeding a predetermined value is identified by the customer emotion identifying unit 250. In this manner, the customer identifying unit 210 may identify, as a customer to be served by the operator 80, a customer for whom an intensity exceeding a predetermined value is identified about a predetermined type of emotion by the customer emotion identifying unit 250.

The customer identifying unit 210 may identify the intensity of an emotion other than anger. For example, the customer identifying unit 210 may identify the emotional intensity for each type of emotion such as joy, anger, sadness or happiness. The customer identifying unit 210 may identify the emotional intensity of a customer by analyzing a facial expression based on an image of the face of the customer acquired from the robot 40. In addition, the customer identifying unit 210 may identify the emotional intensity of a customer by analyzing an utterance or analyzing sound intensity based on a sound of the customer acquired from the robot 40. Then, the customer identifying unit 210 may identify, as a customer to be served by the operator 80, a customer for whom the intensity of sadness exceeded a predetermined value, for example.

The notifying unit 270 may notify an operator selected by the operator selecting unit 220 of information indicative of the type of an emotion of a customer identified by the customer emotion identifying unit 250. Thereby, the operator 80 can decide an appropriate serving content taking an emotion of a customer into consideration.

In addition, the customer information acquiring unit 200 may acquire, as customer information, the history of purchase of items purchased in the past by a customer that can be served by each of a plurality of robots 40. The customer identifying unit 210 may identify, as a customer to be served by the operator 80, a customer for whom the acquired purchase history meets a predetermined condition. As one example, the customer identifying unit 210 may identify, as a customer to be served by the operator 80, a customer who has purchased a predetermined item. In addition, the customer identifying unit 210 may identify, as a customer to be served by the operator 80, a customer who has purchased items with prices equal to or higher than a predetermined price a predetermined number of times or more. Thereby, the operator 80 is caused to serve, through the robot 40, a customer who needs to be served in a special manner, and the robot 40 is caused to autonomously serve a customer who needs not to be served in a special manner.

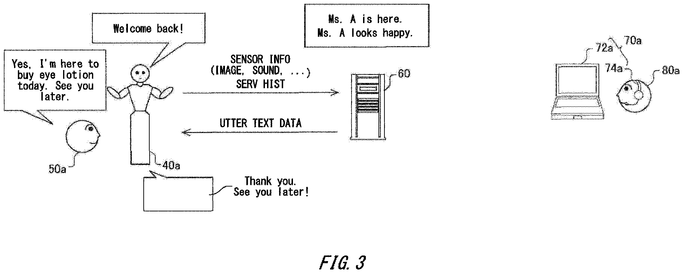

FIG. 3 is a figure for schematically explaining a sequence in a situation where the robot 40a in the autonomous operation state is serving the customer 50a. The robot 40a transmits, to the server 60, sensor information such as sounds or images detected at the sensor unit 120.

Here, it is assumed that an image of the face of the customer 50a and the name of the customer 50a, "Ms. A", are already stored in the storage unit 280 of the server 60. For example, the serving control unit 240 has studied the name of the customer 50a from conversations or the like between the robot 40a and the customer 50a in the past, and an image of the face of the customer 50a and the name "Ms. A" are stored in the storage unit 280 in association with each other.

In this case, the serving control unit 240 collates a facial image received from the robot 40a and facial images stored in the storage unit 280, and determines that a visitor is Ms. A who has visited the location in the past. Thereby, information "Ms. A is here." is generated.

In addition, for each type of emotion among a plurality of types of emotion, the customer emotion identifying unit 250 identifies the emotional intensity of the customer 50a based on information such as sounds or images received from the robot 40a. For example, the customer emotion identifying unit 250 identifies the intensity of each of "joy", "anger", "sadness" and "happiness". As one example, the customer emotion identifying unit 250 identifies the type of an emotion and its emotional intensity based on a facial expression of a face identified in an image, the state of voice identified in a sound, or the like. Here, examples of the state of voice may include a state of voice representing whether or not the voice implies anger, whether or not the voice sounds happy, and so on. The customer emotion identifying unit 250 may extract a sound feature amount such as the fundamental frequency from a sound, and identify the state of voice based on the extracted sound feature amount. The customer emotion identifying unit 250 may identify the most intense emotion as a current emotion of the customer 50a.

Here, if an emotion of "happiness" among "joy, anger, sadness and happiness" is identified as an emotion of the customer 50a, the serving control unit 240 generates information, "Ms. A looks happy.". The serving control unit 240 decides to utter "Welcome back." as an appropriate serving content in this situation, transmits text data of the utterance content to the robot 40a and causes the robot 40a to utter. In addition, in response to a positive phrase from the customer 50a after the utterance and a returned reply "See you later.", the serving control unit 240 decides to utter "Thank you! See you later!" as an appropriate serving content in this situation, and causes the robot 40a to utter.

Because the serving control unit 240 in these situations have already been able to decide highly appropriate serving contents, and the customer emotion identifying unit 250 has determined that the emotion of the customer 50a has not worsened, the serving control unit 240 preserves the autonomous operation state of the robot 40a without requesting the operator 80 to deal with the customer 50a. The communicating unit 202 continues receiving, from the robot 40a, the serving history indicative of contents of utterance or contents of action by the robot 40a or the like, and the recording control unit 282 stores the serving history in the storage unit 280 in association with times.

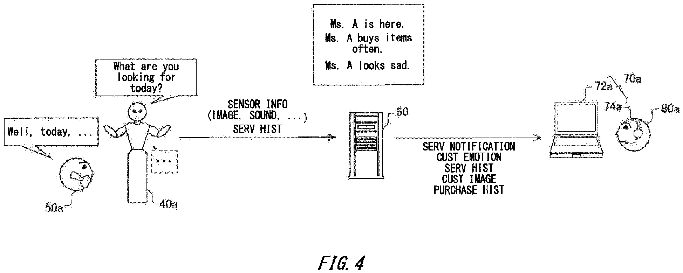

FIG. 4 is a figure for schematically explaining a sequence until the operator 80a is requested to serve the customer 50a. At the server 60, the serving control unit 240 recognizes that the customer 50a is "Ms. A" and generates information, "Ms. A is here.". In addition, based on the purchase history of Ms. A stored in the storage unit 280, the serving control unit 240 recognizes that she is a customer who buys items frequently, and generates information, "Ms. A buys items often.". The serving control unit 240 decides to utter "What are you looking for today?" as an appropriate serving content in this situation, and causes the robot 40a to utter.

Next, the serving control unit 240 detects that the intensity of "sadness" among emotions of "joy, anger, sadness and happiness" exceeded a predetermined threshold based on a reply from the customer 50a that "Well, today, ..." and an image of the customer 50a. Thereby, the serving control unit 240 generates information, "Ms. A looks sad.". The serving control unit 240 in this situation determines that it cannot decide an appropriate response to the reply "Well, today, ...", and decides to request an operator 80 to serve her.

In this case, the customer identifying unit 210 selects an operator 80 to serve the customer 50a from among operators 80. For example, the customer identifying unit 210 selects, as an operator 80 to serve the customer 50a, an operator other than operators who are currently serving other customers 50. The more intense an emotion of the customer 50a is, the higher the ability to serve of an operator 80 selected by the customer identifying unit 210 may be. Information indicative of the abilities to serve of operators 80 may be stored in the storage unit 280 in association with information identifying the operators 80, and the customer identifying unit 210 may refer to the information stored in the storage unit 280 to select an operator 80 to serve the customer 50a.

Here, if the customer identifying unit 210 selects the operator 80a as an operator to serve the customer 50a, the notifying unit 270 transmits a serving notification to the operator terminal 70a manipulated by the operator 80a. In this case, the notifying unit 270 transmits, together with the serving notification and to the operator terminal 70a, information indicative of an emotion of the customer 50a, information indicative of the serving history between the robot 40a and the customer 50a, an image of the customer 50a, and information indicative of the past purchase history of the customer 50a.

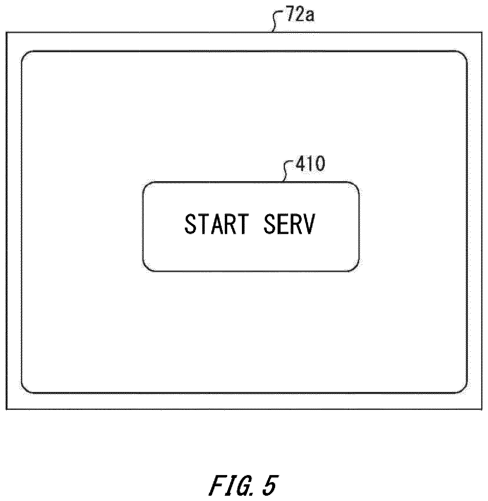

FIG. 5 schematically shows a display content of a serving notification issued by the operator terminal 70a. At the operator terminal 70a, upon reception of the serving notification from the server 60, the computer 72a displays on a screen of the computer 72a an object 410 indicative of that serving is requested. The computer 72a notifies the operator 80a by outputting a notification sound to a headset 74a worn by the operator 80a. Upon detection that the object 410 was pressed, the computer 72a makes a transition to a serving mode.

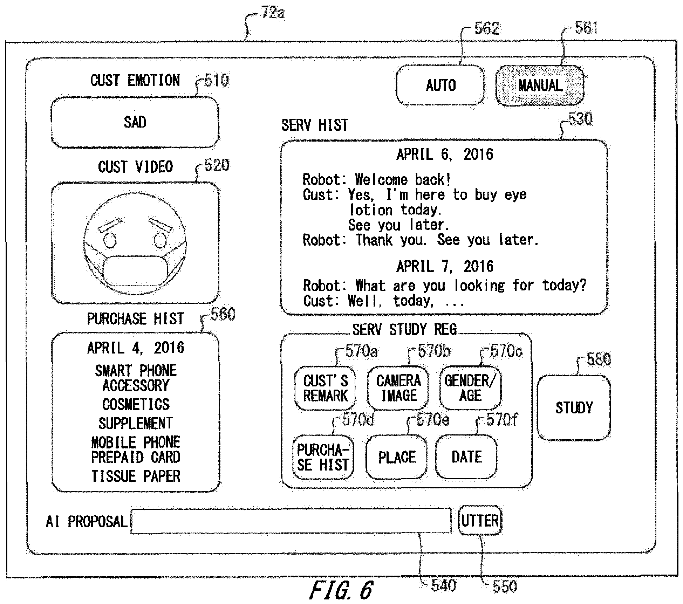

FIG. 6 schematically shows a display content of the computer 72a in a situation where the robot 40a is in the operator serving state. At the operator terminal 70a, the computer 72a displays on an object 510 information indicative of an emotion of the customer 50a received from the server 60. In addition, the computer 72a displays on an object 520 an image of the face of the customer 50a received from the server 60. In addition, the computer 72a displays on an object 530 information indicative of the history of serving between the robot 40a and the customer 50a received from the server 60. In addition, the computer 72a displays on an object 560 information indicative of the purchase history of the customer 50a received from the server 60.

In addition, the computer 72a displays a manual button 561 and an auto button 562 on the screen. The auto button 562 is a button for instructing the robot 40a to make a transition to the autonomous serving state. The manual button 561 is a button for instructing the robot 40a to make a transition to the operator serving state. Because in FIG. 6, the robot 40a is in a state after making a transition to the operator serving state, the manual button 561 is already selected, and the auto button 562 can be selected.

The computer 72a displays on the screen a basis-for-determination button 570a to a basis-for-determination button 570f, and a study button 580 for registering serving study data. In addition, the computer 72a displays on the screen an AI proposal box 540 and an utterance button 550. The basis-for-determination buttons 570, study button 580, AI proposal box 540 and utterance button 550 are explained below.

The computer 72a acquires, from the server 60, a sound acquired by the robot 40a, outputs it to the headset 74a and provides the sound to the operator 80a. Here, the computer 72a acquires data of sounds collected by a microphone unit of the headset 74a to generate information about sounds of the operator 80a, and transmits it to the server 60. Specifically, the computer 72a extracts language from the sound data and converts it into a text, and transmits the obtained text data to the server 60. The text data transmitted to the server 60 is processed as data of a text to be uttered by the robot 40a. The computer 72a may transmit, to the server 60 and as sound information, sound data itself representing sound waveforms. In this case, it may be converted into a text at the server 60.

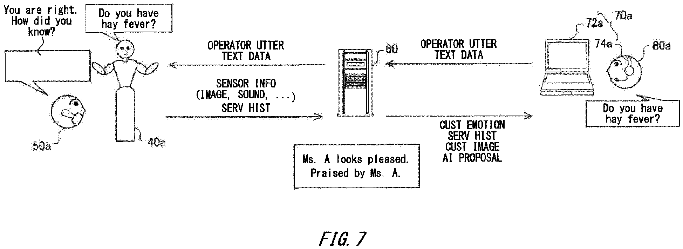

FIG. 7 schematically shows a sequence in a situation where the robot 40a is serving the customer 50a based on an action of the operator 80a.

The operator 80a determines that the customer 50a is wearing a mask based on an image in the object 520 of FIG. 6 and utters, "Do you have hay fever?". Then at the computer 72a, the sound, "Do you have hay fever?", is converted into a text, and the text is transmitted to the server 60. At the server 60, upon reception by the communicating unit 204 of the text data indicative of the utterance content, the serving control unit 240 transmits the received text data to the robot 40a and causes the robot 40a to utter.

After utterance based on the text data, the robot 40a transmits, to the server 60, sensor information obtained through detection at the sensor unit 120. At the server 60, the customer emotion identifying unit 250 detects that the emotion "pleased" has become the most intense one among emotions of the customer 50a, and based on an utterance content, "How did know?", from the customer 50a, the serving control unit 240 generates information that "Ms. A looks pleased" and information that "Praised by Ms. A.". The serving control unit 240 decides a content, "I could tell somehow." as an appropriate utterance content in this situation. Here, because the robot 40a is currently in the operator serving state, it transmits, to the operator terminal 70a, the utterance content as an AI proposal. The operator terminal 70a updates the display content based on the received information.

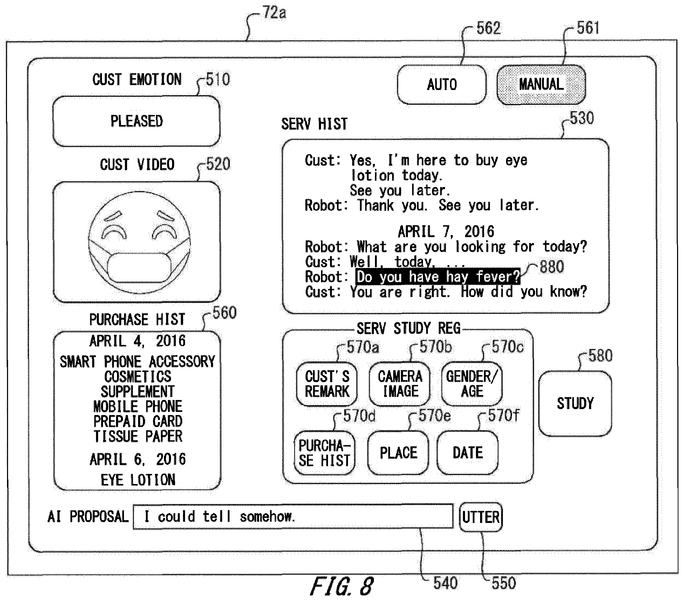

FIG. 8 schematically shows an updated display content on the operator terminal 70a. At the operator terminal 70a, the computer 72a updates the display of the object 510, object 520, object 530 and AI proposal box 540 based on the information received from the server 60.

On the object 530, the characters, "Do you have hay fever?" according to which the operator 80a served are highlight-displayed as shown for example as an object 880, and is displayed such that it can be known that it is a content of utterance by the operator 80a. On the AI proposal box 540, the text, "I could tell somehow.", which is an AI proposal received from the server 60, is displayed. Here, if the operator 80a presses the utterance button 550, the computer 72a transmits, to the server 60, information that an instruction was issued to utter as indicated by the AI proposal.

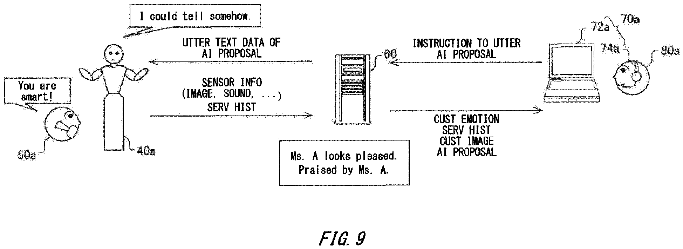

FIG. 9 schematically shows a sequence in a situation where an instruction was issued by the operator 80a to utter an AI proposal. At the server 60, upon reception by the serving-related information acquiring unit 260 of the information that the instruction was issued to utter the AI proposal, the serving control unit 240 transmits text data, "I could tell somehow", to the robot 40a and causes the robot 40a to utter.

After utterance by the robot 40a based on the text data, the robot 40a, server 60 and operator terminal 70 perform operation similar to the operation explained with reference to FIG. 6 to FIG. 8 or other figures, and the robot 40a serves the customer 50a in the operator serving state. Upon determining that the robot 40a can autonomously serve the customer 50a taking into consideration information such as an emotion of the customer 50a or an AI proposal, the operator 80a presses the auto button 562 on the screen of the computer 72a, and transmits, to the server 60, an instruction to cause the robot 40a to make a transition to the autonomous operation state.

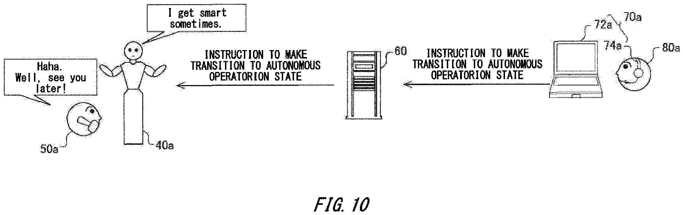

FIG. 10 schematically shows a sequence until the robot 40a returns to the autonomous operation state. At the server 60, upon reception by the serving-related information acquiring unit 260 of the instruction to make a transition to the autonomous operation state, the serving control unit 240 transmits, to the robot 40a, an instruction to make a transition to the autonomous operation state. At the robot 40a, upon reception by the communicating unit 102 of the instruction to make a transition to the autonomous serving state, the information processing unit 130 and serving control unit 240 resume an autonomous serving process based on sensor information from the sensor unit 120a. In this manner, with the customer serving system 10, transitions between serving by the operator 80 and autonomous serving by the robots 40 can be made seamlessly.

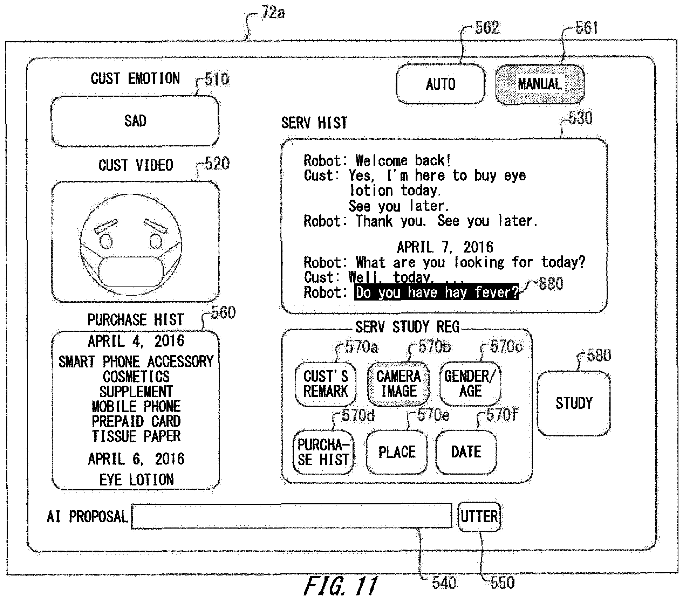

FIG. 11 schematically shows a display content displayed when serving study information is registered on the operator terminal 70a. FIG. 11 shows a situation where the operator 80a is serving, and after the operator 80a utters, "Do you have hay fever?", the robot 40a utters based on the utterance.

Here, the operator 80a selects any of the basis-for-determination button 570a to the basis-for-determination button 570f to indicate based on which information the operator 80a decided the utterance content, "Do you have hay fever?" by pressing the button. Because the operator 80a decided it based on an image of the customer 50a in which she is wearing a mask, the operator 80a presses the basis-for-determination button 570b, and thereby selects that the operator 80a decided it based on the image of the customer 50a. Thereafter, after the study button 580 is pressed, the computer 72a transmits, to the server 60, decision information that the utterance content was decided based on an image of the customer and information indicative of a serving content, "Do you have hay fever?". The server 60 stores, in the storage unit 280, study information based on the received information.

The basis-for-determination button 570a is a button for selecting that an utterance content was decided based on a content of utterance by the customer 50. In addition, the basis-for-determination button 570c is a button for selecting that an utterance content was decided based on the gender and/or age of the customer 50. In addition, the basis-for-determination button 570d is a button for selecting that an utterance content was decided based on the history of purchase of items by the customer 50. In addition, the basis-for-determination button 570e is a button for selecting that an utterance content was decided based on the place at which the robot 40 serves the customer 50. In addition, the basis-for-determination button 570f is a button for selecting that an utterance content was decided based on the date on which the robot 40 served the customer 50, that is, the current date. Information indicated by these basis-for-determination buttons 570 are one example of customer information. Customer information that can be selected as decision information is not limited to the information indicated by the basis-for-determination buttons 570.

A plurality of buttons among the basis-for-determination buttons 570 may be pressed to be able to select a plurality of types of information. For example, if the operator 80a determines an utterance content with reference not only to an image in which the customer 50a is wearing a mask, but also to the purchase history indicating purchase of an eye lotion, the operator 80a may press the basis-for-determination button 570d and basis-for-determination button 570d to select that the decision was made based on the customer image and purchase history.

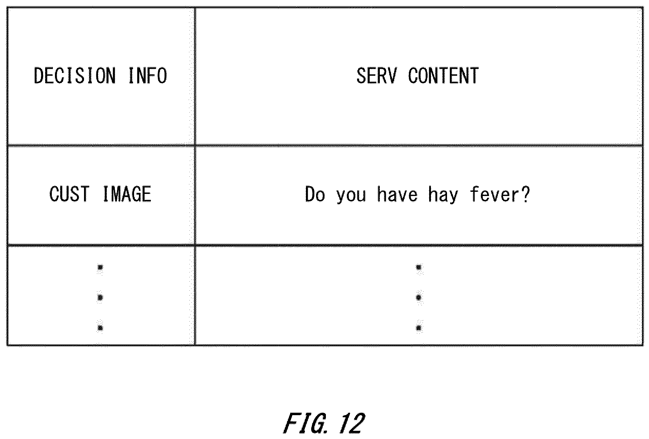

FIG. 12 schematically shows study information stored in the storage unit 280. At the server 60, upon reception by the serving-related information acquiring unit 260 of the above-mentioned decision information and serving content information from the computer 72a, the recording control unit 282 causes the customer image data as the decision information and the text data, "Do you have hay fever?", as a serving content to be stored in the storage unit 280 in association with each other.

The recording control unit 282 may cause not the customer image data itself, but data extracted from the customer image to be stored in the storage unit 280 as the decision information. For example, the recording control unit 282 may cause the character data, "Wearing a mask", extracted from an image to be stored in the storage unit 280 as the decision information. In addition, the recording control unit 282 may cause not specific data, but information, "The decision was made based on a customer image." to be stored in the storage unit 280 as the decision information.

The serving control unit 240 studies serving contents for customers 50 using study information stored in the storage unit 280. For example, the serving control unit 240 performs machine learning using the study information stored in the storage unit 280 as training data to develop judgement rules for deciding serving contents.

The recording control unit 282 may cause still other information to be stored in the storage unit 280 in association with the decision information and serving content. For example, the recording control unit 282 may store, in the storage unit 280, an emotion of the customer 50 before an utterance, "Do you have hay fever?", in association with the decision information and serving content. Thereby, a combination of an emotion of the customer 50 and decision information, and a serving content can be studied. Therefore, the serving control unit 240 can more appropriately decide a serving content taking also an emotion of the customer 50 into consideration in some cases.

As has been explained above, with the customer serving system 10, information used by an operator as bases for determination in deciding serving contents of a robot 40 can be accumulated. In addition, study data for deciding serving contents of a robot 40 can be efficiently collected. In addition, because it is possible to appropriately assign an operator 80 to a robot 40 only if serving by the operator 80 becomes necessary, a larger number of robots 40 can be operated by a smaller number of operators 80.

In the explanation with reference to FIG. 4, mainly, situations where a transition is made to the operator serving state if it is determined that a robot 40 in the autonomous operation state cannot appropriately interact with a customer 50. Other than this, a transition may be made to the operator serving state if an emotion of a customer 50 worsened. In addition, a transition may be made to the operator serving state if a customer 50 of a predetermined gender is visiting. For example, if a woman is visiting, a transition may be made to the operator serving state. For example, at places where commodities aimed at women such as cosmetics are sold, a robot 40 may autonomously serve a man, and an operator 80 may serve a woman. In addition, if a predetermined particular customer 50 is visiting, a transition may be made to the operator serving state. For example, an operator 80 may serve a customer 50 who frequently purchases high-price items. In addition, an operator 80 may serve a customer 50 whose emotion worsened in the past due to serving by a robot 40. In addition, an operator 80 may serve simply if a customer is visiting. For example, if there is no human around, a robot 40 may invite customers in in the autonomous operation state, and may make a transition to the operator serving state if a human is approaching.

The functions of the server 60 may be implemented by one or more computers. At least some of the functions of the server 60 may be implemented by a virtual machine. In addition, at least some of the functions of the server 60 may be implemented by cloud computing. In addition, although in the above-mentioned explanation, the function of deciding contents of utterance by the robot 40a was served by the server 60, at least some of the functions related to control of the robot 40a among the functions of the server 60 may be implemented in the robot 40a. In addition, at least some functions of the functions related to control of the operator terminal 70 among the functions of the server 60 may be implemented in the operator terminal 70. The robots 40 are one example of customer serving apparatuses. Various forms other than robots may be adopted as customer serving apparatuses.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

10: customer serving system; 40: robot; 50: customer; 60: server; 90: communication network; 70: operator terminal, 72: computer, 74: headset; 80: operator; 102: communicating unit; 120: sensor unit; 130: information processing unit; 160: control target; 200: customer information acquiring unit; 202: communicating unit; 204: communicating unit; 208: presentation control unit; 210: customer identifying unit; 220: operator selecting unit; 230: information processing unit; 240: serving control unit; 250: customer emotion identifying unit; 260: serving-related information acquiring unit; 270: notifying unit; 282: recording control unit; 280: storage unit; 290: recording medium; 410, 510: object; 520, 530, 560: object; 540: AI proposal box, 550: utterance button; 561: manual button, 562: auto button, 570: basis-for-determination button, 580: study button, 880: object

## Claims

1. A serving data collecting system comprising:
a customer information acquiring unit that acquires customer information which is information about a customer that can be served by a customer serving apparatus;
a presentation control unit that causes the customer information to be presented to an operator;
a serving information acquiring unit that acquires serving information indicative of a serving content which is decided by the operator and according to which the customer serving apparatus should serve the customer;
a serving decision information acquiring unit that acquires decision information indicative of information that the operator used for deciding the serving content; and
a recording control unit that causes the serving information and the decision information to be recorded in association with each other.

2. The serving data collecting system according to claim 1, further comprising a serving control unit that instructs the customer serving apparatus to serve the customer based on the serving information acquired by the serving information acquiring unit.

3. The serving data collecting system according to claim 2, wherein
the serving information includes text data indicative of a content of utterance by the operator, and
the serving control unit transmits the text data to the customer serving apparatus and causes the customer serving apparatus to utter.

4. The serving data collecting system according to any one of claims 1 to 3, wherein the serving decision information acquiring unit acquires information indicative of a type of customer information that the operator used for deciding the serving content among a plurality of pieces of the customer information presented to the operator.

5. The serving data collecting system according to any one of claims 1 to 4, wherein the customer information includes at least any one of pieces of information about: an image of the customer acquired by the customer serving apparatus; a content of utterance by the customer acquired by the customer serving apparatus; a history of purchase of items purchased by the customer in a past; a place at which the customer serving apparatus serves the customer; and a date on which the customer serving apparatus serves the customer.

6. The serving data collecting system according to any one of claims 1 to 5, wherein
the customer serving apparatus can be in a first state in which the customer serving apparatus autonomously serves a customer, and in a second state in which the customer serving apparatus serves a customer based on the serving information, and
if the customer serving apparatus is in the second state, the serving information acquiring unit acquires the serving information, the serving decision information acquiring unit acquires the decision information, and the recording control unit causes the serving information and the decision information to be recorded in association with each other.

7. The serving data collecting system according to claim 6, wherein in the first state, the customer serving apparatus autonomously serves a customer based on the recorded decision information and the serving information.

8. The serving data collecting system according to claim 6 or 7, further comprising a serving history notifying unit that, if the customer serving apparatus makes a transition from the first state to the second state, notifies the operator of serving history information indicative of a content according to which the customer serving apparatus autonomously served the customer in the first state.

9. The serving data collecting system according to any one of claims 1 to 8, further comprising:
a customer identifying unit that identifies, among a plurality of customers that can be served by each of a plurality of the customer serving apparatuses, a customer to be served by an operator;
an operator selecting unit that selects, from a plurality of operators, an operator to serve a customer identified by the customer identifying unit; and
a serving notifying unit that notifies an operator selected by the operator selecting unit that the operator should start serving a customer identified by the customer identifying unit.

10. The serving data collecting system according to claim 9, further comprising:
an emotion identifying unit that identifies types and intensities of emotions of customers that are served by the plurality of customer serving apparatuses, respectively, based on state of the customers detected by the customer serving apparatus, wherein
the customer identifying unit identifies, as a customer to be served by the operator, a customer identified by the emotion identifying unit as having an intensity of a predetermined type of emotion exceeding a predetermined value.

11. The serving data collecting system according to claim 10, wherein
the emotion identifying unit identifies intensities of anger of customers that are served by the plurality of customer serving apparatuses respectively, and
the customer identifying unit identifies, as a customer to be served by the operator, a customer identified by the emotion identifying unit as having an intensity of anger exceeding a predetermined value.

12. The serving data collecting system according to any one of claims 1 to 11, further comprising a storage unit that stores the serving information and the decision information in association with each other.

13. A customer serving system comprising:
the serving data collecting system according to any one of claims 1 to 12; and
the customer serving apparatus.

14. A program for causing a computer to function as the serving data collecting system according to any one of claims 1 to 12.
